# EUROPEAN PATENT APPLICATION

(11) **EP 1 510 550 A1**
(43) Date of publication of application: **02.03.2005**
(21) Application number: 03756112.3
(22) Date of filing: 27.05.2003
(51) Int. Cl.: C08L 33/06, C08L 51/06, C08L 75/08

(54) **ACRYLIC SOL COMPOSITION**

(30) Priority: 31.05.2002 JP 2002158521
(71) Applicant: Asahi Denka Co., Ltd., Tokyo 116-0012 (JP)
(72) Inventor: SAIGA, Yasuo, Asahi Denka Co., Ltd., Minami Saitama-gun, Saitama 346-0101 (JP); BABA, Kazutaka, Asahi Denka Co., Ltd., Minami Saitama-gun, Saitama 346-0101 (JP)
(74) Representative: Forstmeyer, Dietmar, Dr. rer. nat., Dipl.-Chem.
(86) International application number: PCT/JP2003/006608
(87) International publication number: WO 2003/102077

(57) **Abstract**

An acrylic sol composition comprising acrylic polymer fine particles(a), block polyurethane(b), a plasticizer(c), and a filler(d), **characterized in that** the block polyurethane(b) is one obtained from a polyol and a diisocyanate in nurate form. The acrylic sol composition is free from generation of hydrogen chloride gas and dioxin at combustion; is excellent in storage stability; can be hardened at relatively low temperature; and is excellent in the adherence of coating film to a substrate and the cold resistance and strength of coating film.

## Description

### Technical Field:

This invention relates to an acrylic sol composition for coating or like applications. More particularly, it relates to an acrylic sol composition which does not generate hydrogen chloride or dioxin on combustion, exhibits high storage stability, cures at relatively low temperatures, and provides an excellent coating film in adhesion to a substrate, cold resistance, and strength.

### Background Art:

Plastisol currently and widely used in industry is a composition with a liquid or glue-like consistency in which polymer particles having specifically designed particle size and particle size distribution are uniformly dispersed in a plasticizer together with a filler. Plastisol applied to a substrate and given processing heat at a proper temperature forms a tough coating film.

Vinyl chloride resins (hereinafter "PVC"), such as polyvinyl chloride and vinyl chloride-vinyl acetate copolymers, are frequently used as the polymer particles. Such PVC plastisols have satisfactory room-temperature, long-term storage stability and form a flexible and durable coating film and are therefore widely used in the fields of steel coating, clothing, constructional materials, daily necessities and miscellaneous goods, automotive parts, and so forth.

However, PVC plastisols decompose by heat and light to generate hydrogen chloride gas. Hydrogen chloride thus generated poses problems such that it supplies a source of ozone-depleting substances, causes acid rain, and accelerates damage to furnaces when incinerated. Moreover there is a danger of dioxin generation under some incineration conditions. Therefore PVC plastisol is unfavorable to safety, health, and environmental conservation, and development of new plastisol supplanting PVC plastisol has been awaited.

JP-B-55-16177 proposes plastisol comprising an acrylate polymer and an organic plasticizer that can replace PVC plastisol, which has turned out to be insufficient in storage stability and film-forming properties.

JP-B-63-66861 discloses PVC-free plastisol comprising a methyl methacrylate homo- or copolymer, a plasticizer, a filler, block polyurethane, and a polyamine. When processed at a relatively low temperature, however, the plastisol fails to form a coating film with satisfactory properties on account of insufficient cure of the urethane resin.

JP-A-2001-329135 proposes acrylic sol comprising acrylic polymer fine particles, a blocked urethane resin, a solid hydrazine curing agent, a plasticizer, and a filler. JP-A-2001-329208 proposes acrylic sol for sound absorbing undercoating comprising acrylic polymer fine particles, a plasticizer, a filler, a blocked urethane resin, a curing agent, and a blowing agent, which has been found to have disadvantages such as insufficient adhesion to a substrate and insufficient flexibility in low temperature.

### Disclosure of the Invention:

The present invention has been completed in the light of the above circumstances. An object of the invention is to provide an acrylic sol composition which does not generate hydrogen chloride or dioxin on combustion, exhibits high storage stability, cures at relatively low temperatures, and provides an excellent coating film in adhesion to a substrate, cold resistance, and strength.

As a result of extensive investigations, the inventors of the present invention have found that an acrylic sol composition containing acrylic polymer fine particles, block polyurethane, etc., in which the block polyurethane is a specifically formulated one, achieves improvements in the above-described properties and now reached the present invention.

The present invention provides an acrylic sol composition comprising (a) acrylic polymer fine particles, (b) block polyurethane, (c) a plasticizer, and (d) a filler, characterized in that the block polyurethane (b) is one obtained from polyol and diisocyanate in nurate form.

### Best Mode for Carrying out the Invention:

The acrylic sol composition of the present invention will be described in detail with reference to its preferred embodiments.

The acrylic polymer fine particles (a) that can be used in the invention include those commonly employed in acrylic sol compositions, such as homo- and copolymers of monomers selected from alkyl acrylates, alkyl methacrylates, etc. Specific examples of the monomers are methyl acrylate, ethyl acrylate, n-propyl acrylate, isopropyl acrylate, n-butyl acrylate, isobutyl acrylate, sec-butyl acrylate, tert-butyl acrylate, cyclohexyl acrylate, benzyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, cyclohexyl methacrylate, and benzyl methacrylate.

Styrene, α-methylstyrene, and the like are also useful as a comonomer.

Core-shell acrylic polymer fine particles composed of a core and a shell are preferred as component (a). Use of the core-shell acrylic polymer fine particles is advantageous in that the resulting acrylic sol composition exhibits further improved storage stability and is more inhibited from increasing the viscosity when applied and from bleeding after heat curing.

In using core-shell acrylic polymer fine particles as component (a), it is preferred that the core be formed of a polymer compatible with a plasticizer and the shell be formed of a polymer incompatible with a plasticizer. With the plasticizer-compatible core being covered with the plasticizer-incompatible polymer shell, the acrylic sol composition has the improved storage stability, without increasing its viscosity during storage. Such a shell-forming polymer becomes compatible with the plasticizer on being heated to an appropriate temperature so that no bleeding occurs after heat cure.

The core preferably contains at least 50% by mass of a homo- or copolymer of a monomer(s) selected from n-butyl methacrylate, isobutyl methacrylate, and ethyl methacrylate, etc. so as to have high compatibility with a plasticizer whereby to suppress bleeding after heat curing. In order to impart flexibility to a coating film, in particular, it is still preferred that the core be made mainly of a butyl methacrylate-isobutyl methacrylate copolymer.

The shell preferably contains at least 50% by mass of a homo- or copolymer of a monomer(s) selected from methyl methacrylate, benzyl methacrylate, styrene, etc. so as to have low compatibility with a plasticizer. The shell being low-compatible with a plasticizer, the particles bring about further improved storage stability of the acrylic sol composition, suppressing an increase in viscosity during storage. To further ensure improvement in storage stability, the shell is still preferably made mainly of a methyl methacrylate polymer.

The ratio of the core-forming polymer to the shell-forming polymer preferably ranges from 25/75 to 70/30 by mass. Particles having a core/shell ratio of less than 25/75 by part by mass are more likely to cause bleeding after heat cure than those having the above-recited preferred core/shell ratio. With a core/shell ratio exceeding 70/30 by part by mass, it is more likely that the core is insufficiently covered with the shell than with the above-recited preferred core/shell ratio, which can adversely affect the storage stability.

It is preferred for the acrylic polymer fine particles (a) to have a weight average molecular weight of 100,000 to several millions from the standpoint of coating film strength and storage stability and to have an average particle size of 0.1 to 10 µm from the viewpoint of dispersibility in a plasticizer and storage stability.

The block polyurethane that can be used in the invention as component (b) is one obtained from polyol and diisocyanate in nurate form, more specifically one prepared by reacting diisocyanate in nurate form with polyol, such as polyether polyol or polyester polyol, and blocking the resulting polyurethane with a blocking agent.

Diisocyanates that can provide a nurate form include propane 1,2-diisocyanate, 2,3-dimethylbutane 2,3-diisocyanate, 2-methylpentane 2,4-diisocyanate, octane 3,6-diisocyanate, 3,3-dinitropentane 1,5-diisocyanate, octane 1,6-diisocyanate, 1,6-hexamethylene diisocyanate (HDI), trimethylhexamethylene diisocyanate, lysine diisocyanate, tolylene diisocyanate (TDI), xylylene diisocyanate, metatetramethylxylylene diisocyanate, isophorone diisocyanate (3-isocyanatomethyl-3,5,5-trimethylcyclohexyl isocyanate), 1,3- or 1,4-bis(isocyanatomethyl)cyclohexane, diphenylmethane 4,4'-diisocyanate (MDI), dicyclohexylmethane 4,4'-diisocyanate (hydrogenated MDI), hydrogenated tolylene diisocyanate, and mixtures thereof.

The diisocyanate in nurate form can be obtained by polymerizing the diisocyanate in an inert solvent (e.g., methyl acetate, ethyl acetate, butyl acetate, methyl ethyl ketone or dioxane) or a plasticizer (such as a phthalic ester, e.g., diethyl phthalate, dibutyl phthalate, di-2-ethylhexyl phthalate, a mixed alkyl phthalate having 7 to 11 carbon atoms in the alkyl group (represented as C₇-C₁₁), butylbenzyl phthalate or hexanolbenzyl phthalate; a phosphoric ester, e.g., tricresyl phosphate or triphenyl phosphate; an adipic ester, e.g., di-2-ethylhexyl adipate; or a trimellitic ester, e.g., a C₇-C₁₁ mixed alkyl trimellitate) in the presence of a known catalyst (e.g., tertiary amines, quaternary ammonium compounds, Mannich bases, fatty acid alkali metal salts or alcoholates) in a known manner. It is desirable that a polymerization product system obtained by using a highly volatile solvent be finally subjected to solvent replacement with an appropriate high-boiling solvent, such as a plasticizer.

The polyether polyol preferably includes polyalkylene glycol (molecular weight: ca. 100 to 5500) adducts of polyhydric alcohols.

The polyhydric alcohols include aliphatic dihydric alcohols, such as ethylene glycol, propylene glycol, 1,4-butylene glycol, and neopentane glycol; trihydric alcohols, such as glycerol, trioxyisobutane, 1,2,3-butanetriol, 1,2,3-pentanetriol, 2-methyl-1,2,3-propanetriol, 2-methyl-2,3,4-butanetriol, 2-ethyl-1,2,3-butanetriol, 2,3,4-pentanetriol, 2,3,4-hexanetriol, 4-propyl-3,4,5-heptanetriol, 2,4-dimethyl-2,3,4-pentanetriol, pentamethylglycerol, pentaglycerol, 1,2,4-butanetriol, 1,2,4-pentanetriol, and trimethylolpropane; tetrahydric alcohols, such as erythritol, pentaerythritol, 1,2,3,4-pentanetetrol, 2,3,4,5-hexanetetrol, 1,2,3,5-pentanetetraol, and 1,3,4,5-hexanetetrol; pentahydric alcohols, such as ribitol, arabinitol, and xylitol; and hexahydric alcohols, such as glucitol, mannitol, and iditol. Polyhydroxy compounds, such as bisphenol A, are also usable. Of the polyhydric alcohols preferred are di-, tri- and tetrahydric alcohols, with propylene glycol and glycerol being particularly preferred.

The polyether polyols can be prepared by adding an alkylene oxide having 2 to 4 carbon atoms to such polyhydric alcohol to give a designed molecular weight in a usual manner. The alkylene oxide having 2 to 4 carbon atoms includes ethylene oxide, propylene oxide, and butylene oxide, with propylene oxide being preferred.

The polyester polyols include conventionally known polyesters prepared from, for example, polycarboxylic acids and polyhydric alcohols and polyesters obtained from lactams.

The polycarboxylic acids include benzenetricarboxylic acid, adipic acid, succinic acid, suberic acid, sebacic acid, oxalic acid, methyladipic acid, glutaric acid, pimelic acid, azelaic acid, phthalic acid, terephthalic acid, isophthalic acid, thiodipropionic acid, maleic acid, fumaric acid, citraconic acid, itaconic acid, and other appropriate like ones.

The polyhydric alcohols include ethylene glycol, propylene glycol, 1,4-butanediol, 1,3-butanediol, 1,5-pentanediol, 1,6-hexanediol, bis(hydroxymethylchlorohexane), diethylene glycol, 2,2-dimethylpropylene glycol, 1,3,6-hexanetriol, trimethylolpropane, pentaerythritol, glucitol, glycerol, and other appropriate like ones. In addition, polyhydroxy compounds, such as polytetramethylene glycol and polycaprolactone glycol, are also usable.

The polyurethane composing the block polyurethane (b) used in the invention is obtained by, for example, allowing a polyhydroxy compound, such as the above-described polyether polyol and/or polyester polyol or its mixture with a hydroxy-containing glyceride, e.g., castor oil, to react with the aforementioned diisocyanate in nurate form.

In the preparation of the polyurethane, a molar ratio of the diisocyanate in nurate form to the polyhydroxy compound, e.g., polyol, is usually 1.5 to 3.5/1, preferably 2.0 to 3.0/1. The NCO content of the polyurethane is usually 1 to 20%, preferably 2 and 15%.

The polyurethane can be obtained in a common method. The reaction temperature is usually 40° to 110°C, preferably 50° to 100°C. The reaction can be carried out using a known catalyst for accelerating urethane polymerization, such as an organometallic compound, e.g., dibutyltin dilaurate, tin octoate, stannous octoate, lead octylate, lead naphthoate, and zinc octylate, or a tertiary amine compound, e.g., triethylenediamine or triethylamine.

Of the above-described polyurethanes preferred are those obtained by the reaction between diisocyanate in nurate form and polyether polyol, especially one obtained from hexamethylene diisocyanate in nurate form and polyether polyol, because they provide an excellent acrylic sol composition in storage stability and adhesion to a substrate.

The blocking agents that can be used to block the polyurethane include active methylene compounds, such as malonic diesters (e.g., diethyl malonate), acetylacetone, and acetoacetic esters (e.g., ethyl acetoacetate); oxime compounds, such as acetoxime, methyl ethyl ketoxime (MEK oxime), methyl isobutyl ketoxime (MIBK oxime), and methyl ketoxime; monohydric alcohols, such as methyl alcohol, ethyl alcohol, propyl alcohol, butyl alcohol, heptyl alcohol, hexyl alcohol, octyl alcohol, 2-ethylhexyl alcohol, isononyl alcohol, stearyl alcohol, and their isomers; glycol derivatives, such as methyl glycol, ethyl glycol, ethyl diglycol, ethyl triglycol, butyl glycol, and butyl diglycol; and amine compounds, such as dicyclohexylamine.

Among these blocking agents, those which dissociate to regenerate an isocyanate group at temperatures ranging 100° to 160°C are preferred, while depending on the kind of the isocyanurate ring-containing polymer or the baking temperature of the applied acrylic sol composition. A particularly preferred blocking agent is an oxime compound, especially a ketoxime compound. A ketoxime compound easily reacts with an isocyanate and provides block polyurethane that dissociates at a relatively low temperature as compared with one obtained using other blocking agents. It is possible to use an alkyl alcohol or a glycol derivative in combination with an oxime compound.

The blocking reaction to obtain the block polyurethane (b) is performed in a known manner. The blocking agent is used in an amount usually of from 1 to 2 equivalents, preferably 1.05 to 1.5 equivalents, per free isocyanate group.

While the blocking of the polyurethane is commonly effected by adding the blocking agent in the final reaction step, the block polyurethane (b) may be obtained by adding the blocking agent in an arbitrary stage of the preparation to cause blocking.

The blocking agent can be added either at the end of or in the initial stage of polymerization. Addition of the blocking agent can be done in other methods such that part of the blocking agent is added in the initial stage of polymerization and the rest at the end of the polymerization. Preferably, the blocking agent is added at the end of the polymerization. The isocyanate content (%), which is determined by, for example, the method described in Polyurethane, Maki Shoten, 1960, 21, can be used as an indication of the end point of polymerization. The blocking reaction is carried out at a temperature usually of 50° to 150°C, preferably 60° to 120°C, for about 1 to 7 hours. It is possible to accelerate the reaction by addition of the aforesaid known catalyst for urethane polymerization. In effecting the reaction, an arbitrary amount of the plasticizer described later can be added to the reaction system.

The acrylic sol composition of the present invention preferably contains the acrylic polymer fine particles (a) and the block polyurethane (b) at an (a) to (b) ratio of 90/10 to 15/85, still preferably 90/10 to 50/50, by mass. When the amount of the block polyurethane (b) is less than 10 parts by mass for 90 parts by mass of the acrylic polymer fine particles (a), the coating film of the acrylic sol composition tends to be insufficient in adhesion to a substrate, cold resistance, and strength as compared with that of the acrylic sol composition having the above-recited preferred (a) to (b) ratio. When the amount of the block polyurethane (b) is more than 85 parts by mass for 15 parts by mass of the acrylic polymer fine particles (a), the acrylic sol composition tends to have an increased viscosity, which can impair the workability in applying the composition, as compared with that having the above-recited preferred (a) to (b) ratio.

The plasticizers that can be used in the invention as component (c) include those conventionally employed in PVC plastisol, such as phthalic acid plasticizers, e.g., diisononyl phthalate, di(2-ethylhexyl) phthalate, diisodecyl phthalate, and butylbenzyl phthalate, fatty acid ester plasticizers, e.g., di(2-ethylhexyl) adipate, di(n-decyl) adipate, di(2-ethylhexyl) adipate, dibutyl sebacate, and di(2-ethylhexyl) sebacate; phosphoric esters, e.g., tributyl phosphate, tri(2-ethylhexyl) phosphate, and 2-ethylhexyldiphenyl phosphate, epoxy plasticizers, e.g., epoxidized soybean oil, polyester plasticizers, and benzoic acid plasticizers. These plasticizers can be used either individually or as a combination of two or more thereof. It is particularly preferred to use diisononyl phthalate in view of its low price and availability. The plasticizer (c) is preferably used in an amount of 50 to 500 parts by mass, still preferably 80 to 300 parts by mass, per 100 parts by mass of the acrylic polymer fine particles (a).

The fillers that can be used in the invention as component (d) include those conventionally employed in PVC plastisol, such as calcium carbonate, mica, talc, kaolin clay, silica, and barium sulfate. Fibrous fillers, such as glass fiber, wollastonite, alumina fiber, ceramic fiber, and various whiskers, are also useful. Calcium carbonate is particularly preferred because of its low price. From the viewpoint of coating film strength, cost, and the like, the filler (d) is preferably used in an amount of 50 to 800 parts by mass, still preferably 80 to 500 parts by mass, per 100 parts by mass of the acrylic polymer fine particles (a).

The acrylic sol composition of the present invention can contain (e) a cure accelerator. Useful cure accelerators (e) include tertiary amines, organometallic compounds, alkali metal compounds, and radical generators. Tertiary amines and organometallic compounds, such as organotin compounds, are particularly preferred.

The tertiary amines include triethylamine, ethyldimethylamine, propyldimethylamine, triethylamine, N,N,N',N'-tetramethyl-1,3-butanediamine, diethylethanolamine, methyldiethanolamine, triethanolamine, bis(dimethylaminoethyl) ether, N,N'-dimethylpiperazine, N,N'-diethyl-2-methylpiperazine, triethylenediamine, N-methylmorpholine, N-(2-hydroxypropyl)dimethylmorpholine, benzyldimethylamine, 1,8-diazabicyclo(5.4.0)undecene-1 (DBU), 2-(dimethylaminomethyl)phenol (DMP-10), and 2,4,6-tris(dimethylaminomethyl)phenol (DMP-30).

Triethylamine is the most preferred of these tertiary amines because it provides an excellent acrylic sol composition in low-temperature curability and storage stability.

The organotin compounds include methylstannoic acid, butylstannoic acid, octylstannoic acid, dimethyltin oxide, dibutyltin oxide, dioctyltin oxide, dimethyltin sulfide, dibutyltin sulfide, dioctyltin sulfide, monobutyltin oxide sulfide, methylthiostannoic acid, butylthiostannoic acid, octylthiostannoic acid, dibutyltin dilaurate, dibutyltin distearate, dioctyltin dioleate, dibutyltin basic laurate, dibutyltin dicrotonate, dibutyltin bis(butoxydiethylene glycol maleate), dibutyltin methyl octyl neopentyl glycol maleate, dibutyltin isooctyl 1,4-butanediol maleate, dibutyltin dimethacrylate, dibutyltin dicinnamate, dioctyltin bis(oleyl maleate), dibutyltin bis(stearyl maleate), dibutyltin itaconate, dioctyltin maleate, dimethyltin dicrotonate, dioctyltin bis(butyl maleate), dibutyltin dimethoxide, dibutyltin dilauroxide, dioctyltin ethylene glycoxide, pentaerythritol dibutyltin oxide condensate, dibutyltin bis(lauryl mercaptide), dimethyltin bis(stearyl mercaptide), monobutyltin tris(lauryl mercaptide), dibutyltin β-mercaptopropionate, dioctyltin β-mercaptopropionate, dibutyltin mercaptoacetate, monobutyltin tris(isooctyl mercaptoacetate), monooctyltin tris(2-ethylhexyl mercaptoacetate), dibutyltin bis(isooctyl mercaptoacetate), dioctyltin bis(isooctyl mercaptoacetate), dioctyltin bis(2-ethylhexyl mercaptoacetate), dimethyltin bis(isooctyl mercaptoacetate), dimethyltin bis(isooctyl mercaptopropionate), monobutyltin tris(isooctyl mercaptopropionate), bis[monobutyldi(isooctoxycarbonylmethylenethio)tin] sulfide, bis[dibutylmono(isooctoxycarbonylmethylenethio)tin] sulfide, monobutylmonochlorotin bis(isooctyl mercaptopropionate), monobutylmonochlorotin bis(isooctyl mercaptoacetate), monobutylmonochlorotin bis(lauryl mercaptide), butyltin bis(ethyl cellosolve maleate), bis(dioctyltin butyl maleate) maleate, bis(methyltin diisooctyl thioglycolate) disulfide, bis(methyl/dimethyltin mono/diisooctyl thioglycolate) disulfide, bis(methyltin diisooctyl thioglycolate) trisulfide, bis(butyltin diisooctyl thioglycolate) trisulfide, and 2-butoxycarbonylethyltin tris(butyl thioglycolate).

Alkyltin carboxylates are preferred of these organotin compounds. Dibutyltin dilaurate is particularly preferred because it provides an excellent acrylic sol composition in low-temperature curability.

The cure accelerator (e) is preferably used in an amount of 0.1 to 5 parts by mass, still preferably 0.5 to 3 parts by mass, per 100 parts by mass of the block polyurethane (b). Addition of less than 0.1 parts by mass results in no noticeable improvement in adhesion or film strength. Use of more than 5 parts by mass is not only wasteful but can bring about adverse effects, such as reduction in storage stability and film strength.

The acrylic sol composition of the invention can contain other additives known in the art, including colorants, antioxidants, blowing agents, diluents, and ultraviolet absorbers. Useful colorants include inorganic pigments, such as titanium dioxide and carbon black, and organic pigments, such as azo pigments and phthalocyanine pigments. Useful antioxidants include phenol antioxidants and amine antioxidants. The blowing agents that can be used include those which generate gas on heating, such as azo blowing agents, e.g., azodicarbonamide and azobisformamide. Useful diluents include solvents such as xylene and mineral turpentine. Useful ultraviolet absorbers include benzotriazole derivatives.

The acrylic sol composition of the invention can be prepared by any method conventionally and commonly employed for plastisol preparation. For example, the acrylic sol composition of the invention is prepared by thoroughly mixing the acrylic polymer fine particles (a), the block polyurethane (b), the plasticizer (c), the filler (d), the cure accelerator (e) and, if desired, other additives by stirring in a known mixing machine. Useful mixing machines include a planetary mixer, a kneader, a grain mill, and a roll.

The acrylic sol composition of the invention can be applied by conventional known coating methods including brush coating, roller coating, air spraying, and airless spraying. The applied acrylic sol composition is heated to form a coating film. Heating is carried out in an ordinary manner, for example, using a hot air circulating drying oven.

The acrylic sol composition of the present invention is suited for use as coatings, inks, adhesives, pressure-sensitive adhesives, sealing agents, and so forth. It is also applicable to molded articles including daily miscellaneous goods, toys, industrial parts, and electrical parts. Application to paper, cloth, etc. provides artificial leather, rugs, wallpaper, clothing materials, waterproof sheets, etc. Application to a metal plate provides an anticorrosive metal plate.

The acrylic sol composition of the present invention will now be illustrated more concretely by way of Examples.

### PREPARATION EXAMPLE 1: Preparation of Block Polyurethane (BU-1)

In a reaction vessel were charged 396 g of diisononyl phthalate and 198 g of polypropylene glycol (molecular weight (MW): 1000) and subjected to dehydration reaction at 100° to 110°C under reduced pressure of 30 mmHg for 1 hour. The reaction mixture was cooled to 60°C, and 308 g of Sumidur N3300 (hexamethylene diisocyanate in nurate form, available from Sumitomo Bayer Urethane Co., Ltd.) and 0.24 g of dibutyltin dilaurate were added thereto, followed by allowing the mixture to react in a nitrogen atmosphere at 80° to 90°C for 1 hour. The reaction system was cooled to 60°C, and 108 g of methyl ethyl ketoxime was added thereto dropwise, followed by aging at 80° to 90°C for 2 hours.

After confirming complete disappearance of the NCO absorption at 2250 cm⁻¹ in the IR spectrum, 10 g of dibutyltin dilaurate was added to the mixture to obtain block polyurethane, designated BU-1.

### PREPARATION EXAMPLE 2: Preparation of Block Polyurethane (BU-2)

Block polyurethane, BU-2, was prepared in the same manner as in Preparation Example 1, except for replacing the polypropylene glycol (MW: 1000) with polytetramethylene glycol (MW: 1000).

### PREPARATION EXAMPLE 3: Preparation of Block Polyurethane (BU-3)

Block polyurethane, BU-3, was prepared in the same manner as in Preparation Example 1, except for replacing the polypropylene glycol (MW: 1000) with Adeka Polyether Polyol BPX-55 (Bisphenol A polyoxypropylene adduct, available from Asahi Denka Co., Ltd.).

### PREPARATION EXAMPLE 4: Preparation of Block Polyurethane (BU-4)

In a reaction vessel were charged 396 g of diisononyl phthalate and 198 g of polypropylene glycol (MW: 1000) and subjected to dehydration reaction at 100° to 110°C under reduced pressure of 30 mmHg for 1 hour. The reaction mixture was cooled to 60°C, and 308 g of Sumidur N3300 (hexamethylene diisocyanate in nurate form, available from Sumitomo Bayer Urethane Co., Ltd.) and 0.24 g of dibutyltin dilaurate were added thereto, followed by allowing the mixture to react in a nitrogen atmosphere at 80° to 90°C for 1 hour. The reaction system was cooled to 60°C, and 108 g of methyl ethyl ketoxime was added thereto dropwise, followed by aging at 80° to 90°C for 2 hours.

After confirming complete disappearance of the NCO absorption at 2250 cm⁻¹ in the IR spectrum, block polyurethane, BU-4, was obtained.

### PREPARATION EXAMPLE 5: Preparation of Block Polyurethane (BU-5)

In a reaction vessel were charged 396 g of diisononyl phthalate and 198 g of polypropylene glycol (MW: 1000) and subjected to dehydration reaction at 100° to 110°C under reduced pressure of 30 mmHg for 1 hour. The reaction mixture was cooled to 60°C, and 308 g of Sumidur N3300 (hexamethylene diisocyanate in nurate form, available from Sumitomo Bayer Urethane Co., Ltd.) and 0.24 g of dibutyltin dilaurate were added thereto, followed by allowing the mixture to react in a nitrogen atmosphere at 80° to 90°C for 1 hour. The reaction system was cooled to 60°C, and 108 g of methyl ethyl ketoxime was added thereto dropwise, followed by aging at 80° to 90°C for 2 hours.

After confirming complete disappearance of the NCO absorption at 2250 cm⁻¹ in the IR spectrum, 10 g of triethylamine was added to the reaction mixture to obtain block polyurethane, BU-5.

### PREPARATION EXAMPLE 6: Preparation of Block Polyurethane (BU-6)

In a reaction vessel were charged 396 g of diisononyl phthalate and 198 g of polypropylene glycol (MW: 1000) and subjected to dehydration reaction at 100° to 110°C under reduced pressure of 30 mmHg for 1 hour. The reaction mixture was cooled to 60°C, and 308 g of Sumidur N3300 (hexamethylene diisocyanate in nurate form, available from Sumitomo Bayer Urethane Co., Ltd.) and 0.24 g of dibutyltin dilaurate were added thereto, followed by allowing the mixture to react in a nitrogen atmosphere at 80° to 90°C for 1 hour. The reaction system was cooled to 60°C, and 108 g of methyl ethyl ketoxime was added thereto dropwise, followed by aging at 80° to 90°C for 2 hours.

After confirming complete disappearance of the NCO absorption at 2250 cm⁻¹ in the IR spectrum, 5 g of dibutyltin dilaurate and 5 g of triethylamine were added to the reaction mixture to obtain block polyurethane, BU-6.

### COMPARATIVE PREPARATION EXAMPLE 1: Preparation of Block Polyurethane (BU-X)

In a reaction vessel were charged 396 g of diisononyl phthalate and 1333 g of glycerol tris(polypropylene glycol) (MW: 4000) and subjected to dehydration reaction at 100° to 110°C under reduced pressure of 30 mmHg for 1 hour. The reaction mixture was cooled to 60°C, and 168 g of hexamethylene diisocyanate and 0.24 g of dibutyltin dilaurate were added thereto, followed by allowing the mixture to react in a nitrogen atmosphere at 80° to 90°C for 1 hour. The reaction system was cooled to 60°C, and 108 g of methyl ethyl ketoxime was added thereto dropwise, followed by aging at 80° to 90°C for 2 hours.

After confirming complete disappearance of the NCO absorption at 2250 cm⁻¹ in the IR spectrum, block polyurethane, BU-X, was obtained.

### EXAMPLES 1 TO 8 AND COMPARATIVE EXAMPLES 1 AND 2

Acrylic polymer fine particles, each of the block polyurethanes obtained in Preparation Examples 1 to 6 and Comparative Preparation Example 1, diisononyl phthalate (plasticizer), and calcium carbonate (filler) were compounded according to the formulation shown in Table 1 below and dispersively mixed in a kneader to obtain acrylic sol compositions of Examples 1 to 8 and Comparative Examples 1 and 2.

### Method of Evaluation and Results:

The acrylic sol compositions of Examples 1 to 8 and Comparative Examples 1 and 2 were evaluated for viscosity stability, adhesion, and film strength in accordance with the following methods. The results obtained are shown in Table 2 below.
(1) Viscosity stability
   The initial viscosity of the acrylic sol composition at 20°C was measured with a Brookfield viscometer. The acrylic sol composition was then put in a closed container and maintained at 35°C for 10 days. After cooling to 20°C, the viscosity was measured again to obtain a percent viscosity change from the initial viscosity. A composition showing a viscosity change less than 50% was rated "good", and one showing a viscosity change of 50% or more "bad".
(2) Adhesion
   The acrylic sol composition was applied to one end of an electrodeposition-coated steel plate of 25 mm in width, 100 mm in length and 1.0 mm in thickness. That end of the plate was press bonded with an end of another plate with a spacer therebetween to have the joint thickness set at 3 mm. In this state, the joint was baked at 130°C for 20 minutes, and the spacer was removed. The two plates were pulled apart at a speed of 50 mm/min in a shear direction. The two plates were pulled apart at a speed of 50 mm/min in a shear direction to observe the fracture of the joint. A cohesive fracture was rated "good", and an interfacial fracture "bad".
(3) Coating film strength
   The acrylic sol composition was applied to a separable plate and baked at 130°C for 20 minutes. The film was punched into specified specimens, which were subjected to a tensile test at 23°C, 0°C, and -20°C in accordance with JIS K7113 to measure breaking strength (MPa) and elongation (%) and a tear test at 23°C, 0°C, and -20°C in accordance with JIS K7128-3 to measure tear strength (N).

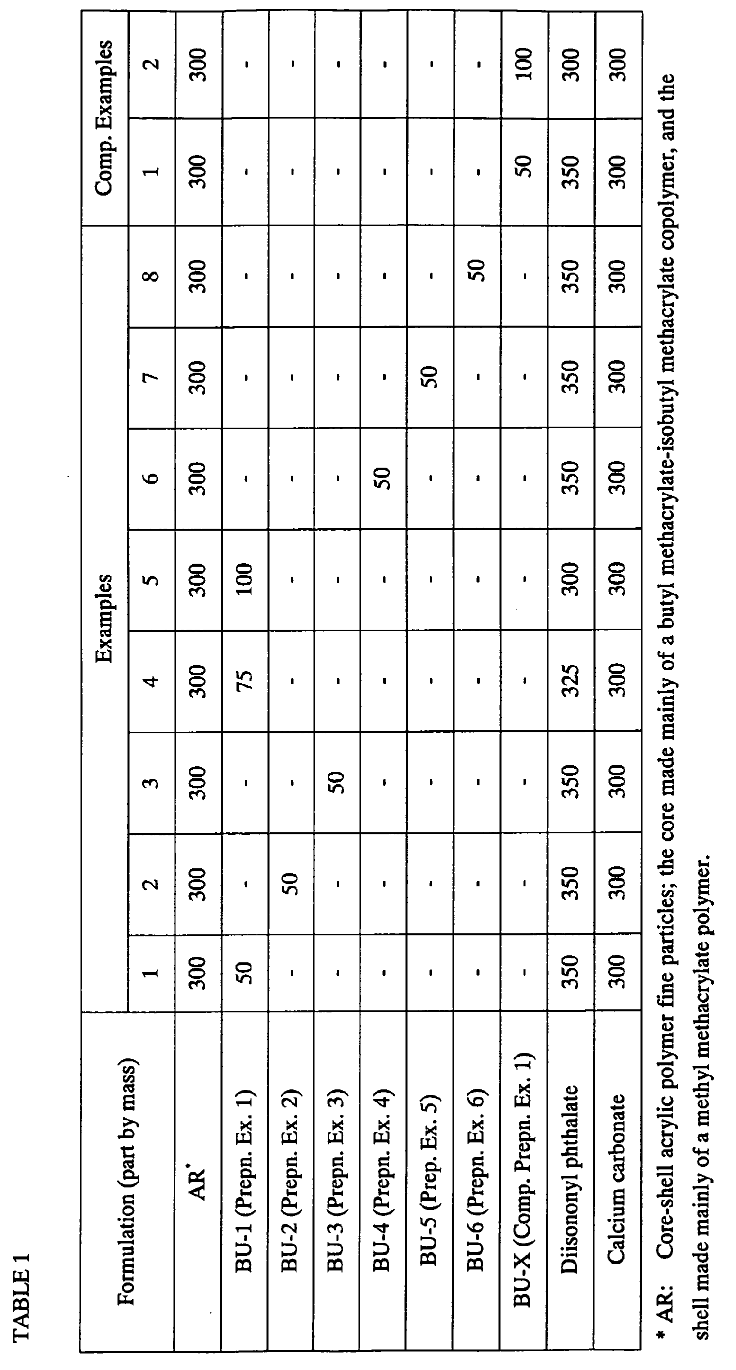

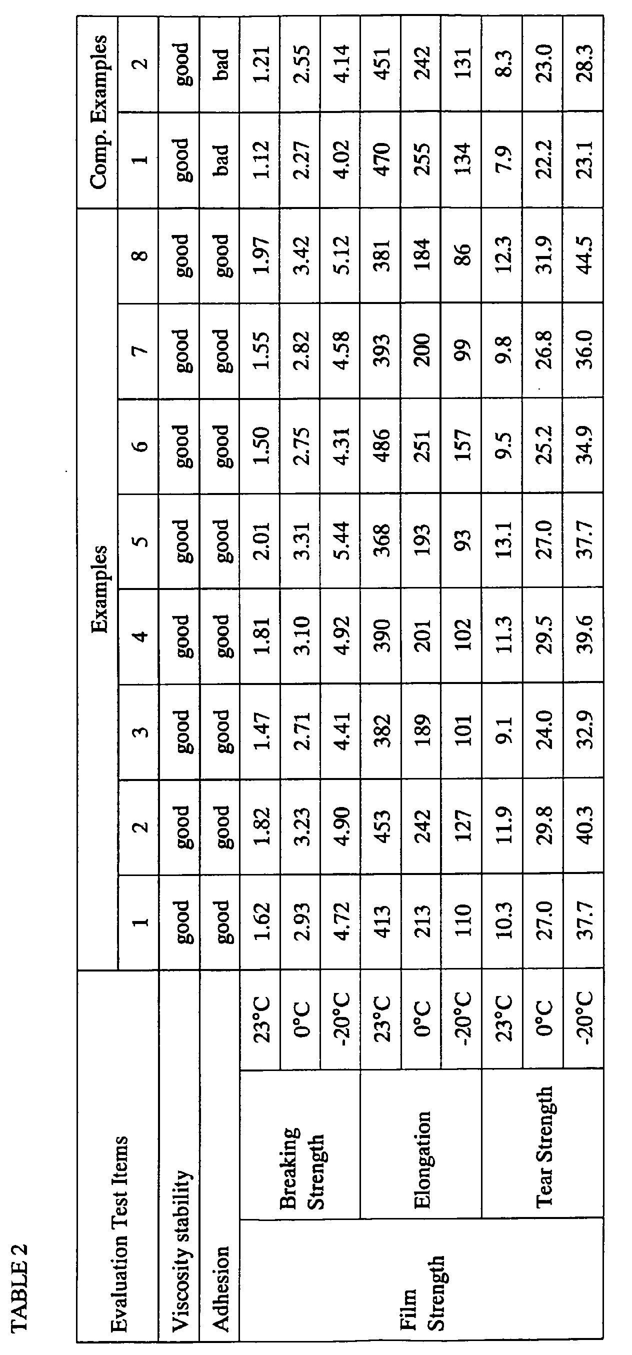

The results shown in Table 2 reveal the followings:

The coating films of the acrylic sol compositions containing the acrylic polymer fine particles, plasticizer and filler with the block polyurethane prepared using diisocyanate (Comparative Examples 1 and 2) have insufficient adhesion and are utterly insufficient in strength.

In contrast, the acrylic sol compositions containing the acrylic polymer fine particles, plasticizer and filler with the block polyurethane prepared using diisocyanate in its nurate form (Examples 1 to 8) are satisfactory in viscosity stability and capable of providing a coating film with high adhesion and toughness.

### Industrial Applicability:

The acrylic sol composition according to the present invention does not generate hydrogen chloride gas or dioxin on combustion, exhibits high storage stability, cures at relatively low temperatures, and provides an excellent coating film in adhesion to a substrate, cold resistance, and strength. The acrylic sol composition is therefore useful in broad applications including sealing compounds, coatings, and daily necessitates.

## Claims

1. An acrylic sol composition comprising (a) acrylic polymer fine particles, (b) block polyurethane, (c) a plasticizer, and (d) a filler, **characterized in that** the block polyurethane (b) is one obtained from polyol and diisocyanate in nurate form.

2. The acrylic sol composition according to claim 1, wherein the ratio of the acrylic polymer fine particles (a) to the block polyurethane (b) is 90/10 to 15/85 by mass.

3. The acrylic sol composition according to claim 1 or 2, wherein the acrylic polymer fine particles (a) have a core-shell structure comprising a core and a shell.

4. The acrylic sol composition according to any one of claims 1 to 3, wherein the block polyurethane (b) is obtained from polyether polyol and hexamethylene diisocyanate in nurate form.

5. The acrylic sol composition according to any one of claims 1 to 4, wherein the block polyurethane (b) is obtained from polypropylene glycol and hexamethylene diisocyanate in nurate form.

6. The acrylic sol composition according to any one of claims 1 to 4, wherein the block polyurethane (b) is obtained by polytetramethylene glycol and hexamethylene diisocyanate in nurate form.

7. The acrylic sol composition according to any one of claims 1 to 4, wherein the block polyurethane (b) is obtained from a bisphenol A polyoxypropylene adduct and hexamethylene diisocyanate in nurate form.

8. The acrylic sol composition according to any one of claims 1 to 7, wherein the block polyurethane (b) is obtained by blocking polyurethane with oxime compounds.

9. The acrylic sol composition according to any one of claims 1 to 8, wherein the block polyurethane (b) is obtained by blocking polyurethane with ketoxime compounds.

10. The acrylic sol composition according to any one of claims 1 to 9, further comprising (e) a cure accelerator selected from tertiary amines or organometallic compounds.

11. The acrylic sol composition according to claim 10, wherein the cure accelerator (e) is dibutyltin dilaurate.

12. The acrylic sol composition according to claim 10, wherein the cure accelerator (e) is triethylamine.
